# EUROPEAN PATENT APPLICATION

(11) **EP 4 787 533 A1**
(43) Date of publication of application: **05.08.2026**
(21) Application number: 24895443.0
(22) Date of filing: 17.05.2024
(51) Int. Cl.: H01M 10/058, B05D 1/04

(54) **BATTERY CELL AND PREPARATION METHOD THEREFOR, BATTERY AND ELECTRIC DEVICE**

(30) Priority: 29.11.2023 CN 202311622322
(71) Applicant: Contemporary Amperex Technology Co., Limited, Ningde, Fujian 352100 (CN)
(72) Inventor: BIAN, Yawei, Ningde, Fujian 352100 (CN); WEI, Zeyou, Ningde, Fujian 352100 (CN); YAN, Zunguang, Ningde, Fujian 352100 (CN); LI, Han, Ningde, Fujian 352100 (CN); MAO, Tingting, Ningde, Fujian 352100 (CN); TANG, Yonghua, Ningde, Fujian 352100 (CN)
(74) Representative: Ziebig Hengelhaupt Intellectual Property Attorneys Patentanwaltskanzlei PartGmbB
(86) International application number: PCT/CN2024/093996
(87) International publication number: WO 2025/112333

(57) **Abstract**

The present application relates to a battery cell (20), a preparation method therefor, a battery (100), and a power consuming apparatus. The preparation method for a battery cell (20) includes: determining that the battery cell (20) is in an uncharged state; spraying an insulating material on at least some regions on an outer surface of a housing (22) of the battery cell (20) in a manner of electrostatic spraying; performing curing processing on a region of the housing (22) on which the insulating material is sprayed, to obtain a battery cell (20) including an insulation layer (24); and injecting an electrolyte solution into the battery cell (20) including the insulation layer (24). According to the preparation method for a battery cell (20) in the present application, insulation spraying is performed when the battery cell (20) is in the uncharged state, so that the insulation spraying can be performed through electrostatic spraying, thereby improving paint utilization on the insulation layer (24) in the battery (100) production process, and reducing production costs.

## Description

### CROSS-REFERENCE TO RELATED APPLICATIONS

The present application claims priority to Chinese Patent Application No. 202311622322.5, filed on November 29, 2023 and entitled "BATTERY CELL, PREPARATION METHOD THEREFOR, BATTERY, AND POWER CONSUMING APPARATUS", which is incorporated herein by reference in its entirety.

### TECHNICAL FIELD

The present application relates to the battery field, and in particular, to a battery cell, a preparation method therefor, a battery, and a power consuming apparatus.

### BACKGROUND

As an important component of a new energy vehicle, a power battery has extremely important service life and safety performance. The service life and safety performance of the battery are affected not only by an electrode material, but also by a structure and insulation performance of a battery housing. To prevent safety problems such as scratch on a surface of the battery housing or short circuit, an insulation layer is disposed on an outer surface of the battery housing.

In some cases, an insulating material is painted on the surface of the battery housing through spraying. How to improve paint utilization on the insulation layer of the battery housing in a battery production process has become a problem to be urgently resolved.

### SUMMARY

In view of the foregoing problem, the present application provides a battery cell, a preparation method for a battery cell, a battery, and a power consuming apparatus, to improve paint utilization on an insulation layer of a battery housing in a battery production process.

According to a first aspect, the present application provides a preparation method for a battery cell. The preparation method for a battery cell includes:
determining that the battery cell is in an uncharged state;
spraying an insulating material on at least some regions on an outer surface of a housing of the battery cell in a manner of electrostatic spraying;
performing curing processing on a region of the housing on which the insulating material is sprayed, to obtain a battery cell including an insulation layer; and
injecting an electrolyte solution into the battery cell including the insulation layer.

In the technical solutions of the embodiments of the present application, insulation spraying is performed when the battery cell is in the uncharged state, so that the insulation spraying can be performed through electrostatic spraying. This can improve paint utilization on the insulation layer of the battery housing in the battery production process, reduce production costs, simplify the spraying process, and improve production efficiency. In addition, the insulation layer formed through electrostatic spraying has higher quality. This helps improve uniformity of insulation performance of the insulation layer, improve the insulation performance, expand a service life, and improve safety performance of the battery cell.

In some embodiments, the insulating material is a photocuring insulating resin material; and the performing curing processing on a region of the housing on which the insulating material is sprayed includes:
irradiating, by using ultraviolet light, the region of the housing on which the insulating material is sprayed, to cure the insulating material.

In this setting manner, the insulating material can be rapidly cured in short time, thereby greatly improving the production efficiency of the battery cell, facilitating large-scale production of the battery cell. In addition, it is energy-saving, environment-friendly, and has high economic efficiency and high adaptability.

In some embodiments, the photocuring insulating resin material comprises an ultraviolet light curing coating. In this way, the appearance of the insulation layer is controllable, the assembly of the battery cell is not affected, a bonding force and an adhesion of the ultraviolet light-curing coating are strong, and the ultraviolet light curing coating does not easily fall off, so that the insulation performance of the housing can be greatly improved, and the insulation performance is stable.

In some embodiment, duration of ultraviolet light irradiation ranges from 3 seconds to 30 seconds. In this way, the insulating material can be rapidly cured in short time, thereby greatly improving the production efficiency of the battery cell, facilitating large-scale production of the battery cell.

In some embodiments, the insulating material is a water-based coating or a solvent-based coating; and the performing curing processing on a region of the housing on which the insulating material is sprayed includes:
performing baking processing on the battery cell, to cure the insulating material; where a baking temperature is greater than 60°C and less than 200°C.

In this setting manner, the insulating material can be rapidly dried and cured, and a selection range of the production process can be greatly expanded, thereby significantly improving performance of the coating, reducing time consumption of the procedure, greatly improving the production efficiency, and reducing the production costs. It is suitable for high-speed automated production, and facilitates large-scale production of the battery cell.

In some embodiments, the baking temperature is greater than 100°C and less than 180°C. In this way, the selection range of the production process can be greatly expanded, thereby significantly improving performance of the coating, reducing time consumption of the procedure, greatly improving the production efficiency, and reducing the production costs. It is suitable for high-speed automated production, and facilitates large-scale production of the battery cell.

In some embodiments, after obtaining the battery cell including the insulation layer, and before the injecting an electrolyte solution into the battery cell including the insulation layer, the method further includes:
performing insulation detection on the housing.

The insulation performance of the housing is detected before the electrolyte solution is injected, to identify and remove a battery cell whose insulation performance does not satisfy a requirement, thereby effectively ensuring that the insulation performance satisfies a product requirement, and avoiding performing electrolyte solution injection on the battery cell that does not satisfy the requirement, to prevent a waste of the electrolyte solution, effectively save materials, and reduce the production costs.

In some embodiments, before the spraying an insulating material on at least some regions on an outer surface of a housing of the battery cell in a manner of electrostatic spraying, the method further includes:
performing cleaning processing on the outer surface of the housing.

By performing cleaning processing on the outer surface of the housing, impurities such as floating dust, rust, or stains on the outer surface of the housing can be removed. This helps improve the adhesion between the insulation layer and the outer surface of the housing, and therefore, the insulation layer does not easily fall off. This improves the quality of the insulation layer, has better insulation performance, and has a longer service life.

In some embodiments, the cleaning processing includes any one or more of sandblasting cleaning, plasma cleaning, and laser cleaning. In this way, the outer surface of the housing can be cleaned with a good cleaning effect.

In some embodiments, the determining that the battery cell is in an uncharged state includes: winding or stacking a positive electrode plate, a negative electrode plate, and a separator into a cell assembly, mounting the cell assembly into the housing, and then covering and soldering an end cover at an opening of the housing, to obtain a battery cell that does not include an electrolyte solution. In this way, the battery cell is in the uncharged state because the battery cell does not include the electrolyte solution.

According to a second aspect, the present application provides a battery cell, where the battery cell is prepared according to the preparation method for a battery cell in any one of the foregoing embodiments. The battery cell includes: a housing, where an insulation layer is disposed on at least some regions on an outer surface of the housing; a cell assembly, where the cell assembly is accommodated in the housing; and an end cover, where the end cover covers an opening of the housing.

In some embodiments, a thickness of the insulation layer on the housing ranges from 80 µm to 200 µm. In this setting manner, the housing has good insulation performance, to ensure the safety performance of the battery cell. In addition, the thickness of the insulation layer is controlled, so that the appearance and the volume dimension of the battery cell can be well controlled, to facilitate subsequent assembly of the battery cell, improve the production efficiency, and ensure a high yield rate. In addition, it is beneficial to save materials, and reduce production costs.

In some embodiments, the thickness of the insulation layer ranges from 110 µm to 120 µm. In this setting manner, it is beneficial to better considering the insulation performance of the housing, the appearance volume of the battery cell, and the yield rate, and reducing the production costs. This is suitable for large-scale production.

According to a third aspect, the present application further provides a battery, where the battery includes the battery cell according to any of the foregoing embodiments.

According to a fourth aspect, the present application provides a power consuming apparatus, where the power consuming apparatus includes the battery in the foregoing embodiments or the battery cell according to any one of the foregoing embodiments, where the battery and the battery cell are configured to supply electric energy.

The foregoing descriptions are merely an overview of the technical solutions of the present application. To understand the technical means of the present application more clearly, implementation can be performed according to content of the specification. Moreover, to make the foregoing and other objectives, features, and advantages of the present application more comprehensible, specific implementations of the present application are particularly described below.

### BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For ordinary technical personnel in the art, other accompanying drawings can be obtained based on the drawings without any creative effort. In the accompanying drawings:
FIG. 1 is a schematic diagram of a structure of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is a schematic flowchart of a preparation method for a battery cell according to some embodiments of the present application; and
FIG. 5 is a schematic diagram of a measurement method of a thickness of an insulation layer on a battery cell according to some embodiments of the present application.

Reference numerals:
1000: Vehicle; 100: battery; 200: controller; 300: motor;
10: box; 11: first part; 12: second part; 20: battery cell; 21: end cover; 21a: electrode terminal; 22: housing; 23: cell assembly; 23a: tab; 24: insulation layer; and 401: measurement probe.

### DETAILED DESCRIPTION

To make the foregoing objectives, features, and advantages of the present application clearer and easier to understand, the following describes specific implementations of the present application in detail with reference to the accompanying drawings. In the following descriptions, many specific details are described for fully understanding of the present application. However, the present application may be implemented in many other manners different from those described herein. A person skilled in the art may make similar improvement without departing from the connotation of the present application. Therefore, the present application is not limited to the specific embodiments disclosed below.

The "embodiment" mentioned in the specification means that particular features, structures, or characteristics described with reference to the embodiment may be included in at least one embodiment of the present application. The term appearing at various positions in the specification does not necessarily refer to a same embodiment, or an independent or alternative embodiment mutually exclusive with another embodiment. A person skilled in the art explicitly or implicitly understands that the embodiments described in the specification may be combined with other embodiments.

Unless otherwise defined, meanings of all technical and scientific terms used herein are the same as those usually understood by a person skilled in the art to which the present application belongs. The terms used herein are merely intended to describe objectives of the specific embodiments, but are not intended to limit the present application. The terms "include", "have", and any variant thereof in the description, claims and the brief description of the drawings of the present application are intended to cover a non-exclusive inclusion.

In the descriptions of the embodiments of the present application, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present application.

In the descriptions of the embodiments of the present application, terms such as "first" and "second" are used merely for the purpose of description, are used for distinguishing different objects, and shall not be construed as indicating or implying relative importance or implying a quantity, a specific order, or a primary-secondary relationship of indicated technical features. Therefore, a feature restricted by "first" or "second" may explicitly indicate or implicitly include at least one of such features. In the descriptions of the embodiments of the present application, "plurality of" means at least two, such as two and three unless it is specifically defined otherwise.

The term "and/or" in the descriptions of the embodiments of the present application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the descriptions of the embodiments of the present application, unless otherwise expressly specified and defined, the terms "mount", "connect", "connection", "fix", and the like should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components, unless otherwise explicitly defined. A person of ordinary skill in the art may understand the specific meanings of the foregoing terms in the present application according to specific situations.

In the descriptions of the embodiments of the present application, unless otherwise explicitly specified or defined, the first feature being located "above" or "below" the second feature may be the first feature being in a direct contact with the second feature, or the first feature being in an indirect contact with the second feature through an intermediary. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

It should be noted that, when an element is expressed as "being fixed to" or "being disposed on" another element, the element may be directly on the another element, or an intermediate element may exist. When an element is considered as "being connected to" another element, the element may be directly connected to the another element, or an intermediate element may also exist. The terms "vertical", "horizontal", "upper", "lower", "left", "right", and similar expressions used in the present application are merely used for an illustrative purpose, and do not indicate the only implementation.

Nowadays, from the perspective of development of the market situation, power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of traction batteries, market demands for traction batteries are also expanding.

As an important component of a new energy vehicle, a power battery has extremely important service life and safety performance. The service life and safety performance of the battery are affected not only by an electrode material, but also by a structure and insulation performance of a battery housing. To prevent safety problems such as scratch on a surface of the battery housing or short circuit, an insulation layer is generally disposed on an outer surface of the battery housing.

In the related technology, a positive electrode plate, a negative electrode plate, a separator, and a housing that does not include an insulation layer are usually first assembled to form a battery cell, and then an electrolyte solution is injected into the battery cell to obtain an assembled battery; and subsequently, insulation spraying is performed on an outer surface of the assembled battery, and an assembled battery including the insulation layer is obtained through curing processing. Because the assembled battery including the electrolyte solution is used for insulation spraying, and the assembled battery including the electrolyte solution is charged, in consideration of safety, only air spraying can be used as the insulation spraying in this case, and electrostatic spraying cannot be used. However, utilization of air-sprayed paint is low, resulting in material waste and high production costs.

To improve the paint utilization and reduce the production costs, first, electrostatic powder may be sprayed on an outer surface of a housing to form an insulation layer, then components such as a positive electrode plate, a negative electrode plate, and a separator are assembled into the housing, then a top cover is soldered to the housing, and finally, an electrolyte solution is injected into the housing to obtain an assembled battery. However, when the battery housing is sprayed first, soldering positions need to be reserved on the electrode plates. The spraying process is complex, and a subsequent step of wrapping an insulation tape needs to be performed on the reserved unsprayed positions. This adds a process step, and reduces production efficiency. In addition, because soldering sparks are generated in the soldering process, and a temperature of the soldering sparks is very high, the insulation layer is easily ablated, and a plurality of tiny dotted dimples are formed on the surface of the insulation layer. These dimples not only affect surface flatness of the insulation layer, but also affect uniformity of insulation performance of the entire surface of the insulation layer.

Based on the foregoing consideration, to improve the paint utilization on the insulation layer of the battery housing in the battery production process, a preparation method for a battery cell is designed. A procedure sequence of an electrolyte solution injection procedure and an insulation spraying procedure in the battery production process is adjusted, to be specific, after a positive electrode plate, a negative electrode plate, a separator, and a housing that does not include an insulation layer are assembled to form a battery core, the electrolyte solution injection procedure is not performed, to obtain a battery cell that does not include the electrolyte solution. Because the battery cell that does not include the electrolyte solution is uncharged, in this case, electrostatic spraying can be performed as the insulation spraying. After the spraying and curing are completed, electrolyte solution injection is performed to obtain the battery cell including the electrolyte solution. Therefore, the paint utilization ratio on the insulation layer of the battery housing in the battery production process can be improved.

The preparation method for a battery cell disclosed in the embodiments of the present application is used for preparing a battery cell. In this way, it is beneficial to improve the paint utilization, reduce the production costs, simplify the spraying process, improve the production efficiency, and improve the uniformity of the insulation performance of the insulation layer.

The battery cell disclosed in the embodiments of the present application may be used in but is not limited to a power consuming apparatus such as a vehicle, a ship, or an aircraft. The battery cell or the battery disclosed in the present application may be used to form a power supply system of the power consuming apparatus, thereby helping reduce costs and improving the insulation performance.

An embodiment of the present application provides a power consuming apparatus using a battery as a power supply. The power consuming apparatus may be, but is not limited to, a mobile phone, a tablet, a laptop, an electric toy, an electric tool, a battery car, an electric automobile, a ship, a spacecraft, or the like. The electric toy may be a stationary or mobile electric toy, for example, a game console, an electric vehicle toy, an electric ship toy, or an electric aircraft toy. The spacecraft may include an airplane, a rocket, a space shuttle, a spaceship, and the like.

For ease of description, the following embodiments are described by using an example in which an electrical device according to some embodiments of the present application is a vehicle 1000.

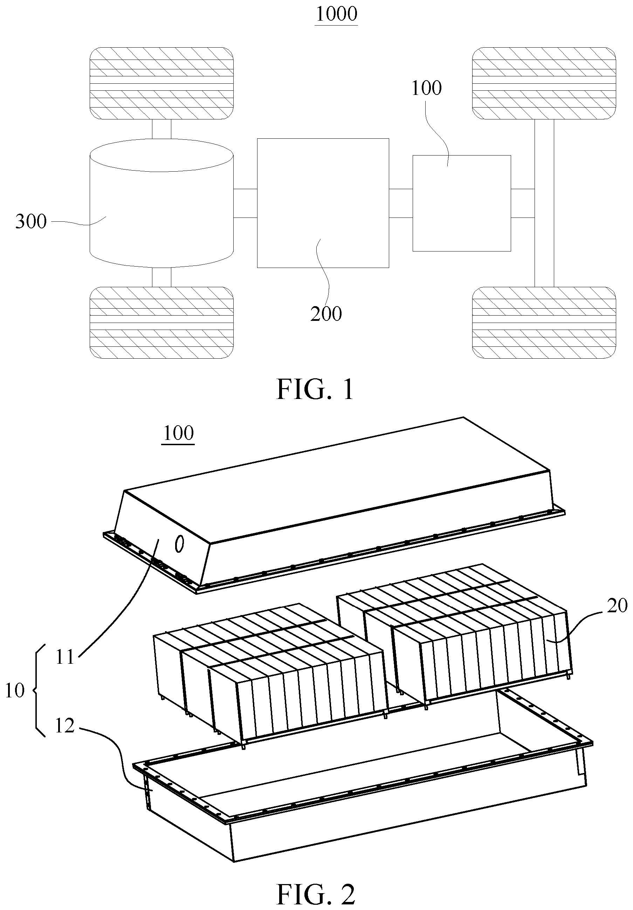

Referring to FIG. 1, FIG. 1 is a schematic diagram of a structure of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, an extended range vehicle, or the like. The inner part of the vehicle 1000 is provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of the present application, the battery 100 may serve not only as a power supply for operating the vehicle 1000, but also as a power supply for driving the vehicle 1000, to alternatively or partially replace fuel or natural gas to provide driving power for the vehicle 1000.

Referring to FIG. 2, FIG. 2 is an exploded view of a battery 100 according to some embodiments of the present application. The battery 100 includes a box body 10 and a battery cell 20, where the battery cell 20 is accommodated in the box body 10. The box 10 is configured to provide an accommodating space for the battery cells 20. The box 10 may use a variety of structures. In some embodiments, the housing 10 may include a first part 11 and a second part 12, the first part 11 and the second part 12 cover each other, and the first part 11 and the second part 12 jointly define the accommodating space for accommodating the battery cells 20. The second portion 12 may be of a hollow structure with an opening at one end, the first portion 11 may be of a plate-like structure, and the first portion 11 covers an opening side of the second portion 12, so that the first portion 11 and the second portion 12 jointly define the accommodating space. Alternatively, the first portion 11 and the second portion 12 each may be of a hollow structure with an opening on one side, and an opening side of the first portion 11 covers an opening side of the second portion 12. Certainly, the box 10 formed by the first portion 11 and the second portion 12 may be in various shapes, such as a cylinder and a cuboid.

In the battery 100, there may be a plurality of battery cells 20, and the plurality of battery cells 20 can be connected in series, parallel, or series-parallel. Series-parallel connection means that both series connection and parallel connection exist among the plurality of battery cells 20. The plurality of battery cells 20 may be directly connected in series, parallel, or series-parallel together, and then the whole formed by the plurality of battery cells 20 may be accommodated in the box 10. Certainly, the battery 100 may also be in the form of a battery module formed by the plurality of battery cells 20 that are first connected in series, parallel, or series-parallel. The plurality of battery modules are then connected in series, parallel, or series-parallel to form a whole and accommodated in the box 10. The battery 100 may also include other structures, for example, the battery 100 may also include a bus component for achieving the electrical connection between the plurality of battery cells 20.

Each battery cell 20 may be a secondary battery or a primary battery, or may be a Li-S battery, a Na-ion battery, or a Mn-ion battery, but is not limited thereto. The battery cell 20 may be cylindrical, flat, cuboid, or in other shapes. In other words, the battery cell 20 is not limited to a square-housing battery cell, and may alternatively be a cylindrical battery cell or the like.

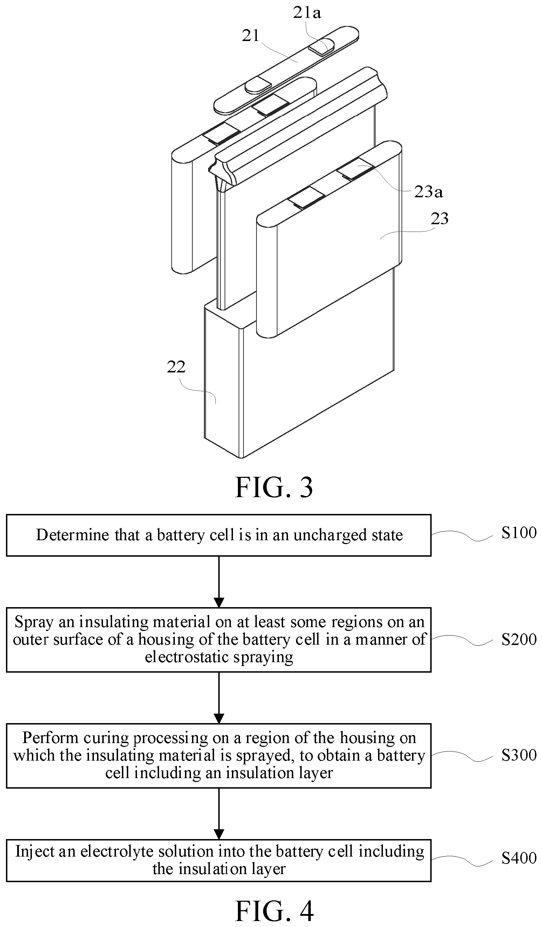

Referring to FIG. 3, FIG. 3 is a schematic diagram of an exploded structure of a battery cell 20 according to some embodiments of the present application. The battery cell 20 is a smallest unit forming a battery. As shown in FIG. 3, the battery cell 20 includes an end cover 21, a housing 22, a cell assembly 23, and other functional components.

The end cover 21 refers to a component that covers an opening of the housing 22 to isolate an internal environment of the battery cell 20 from an external environment. A shape of the end cover 21 is not limited and may be adapted to a shape of the housing 22 to fit the housing 22. In some embodiments, the end cover 21 may be made of a material with specified hardness and strength (for example, aluminum alloy), so that the end cover 21 is less likely to be deformed under pressing and collision, to enable the battery cell 20 to have higher structural strength and enhanced safety performance. Functional components such as electrode terminals 21a may be arranged on the end cover 21. The electrode terminals 21a may be configured to electrically connect to the cell assembly 23 to output or input electrical energy of the battery cell 20. In some embodiments, the end cover 21 may also be provided with a pressure relief mechanism configured to relieve internal pressure when the internal pressure or temperature in the battery cell 20 reaches a threshold. The end cover 21 may also be made of various materials, such as copper, iron, aluminum, stainless steel, aluminum alloy, and plastic, which are not particularly limited in the embodiments of the present application. In some embodiments, an insulator may also be arranged on an inner side of the end cover 21. The insulator can be configured to isolate electrical connection parts in the housing 22 from the end cover 21, reducing a risk of short circuit. For example, the insulator may be made of plastic or rubber.

The housing 22 is an assembly configured to form an internal environment of the battery cells 20 together with the end cover 21, where the formed internal environment may be configured to accommodate the cell assembly 23, an electrolyte solution, and other components. The housing 22 and the end cover 21 may be separate components, an opening may be provided in the housing 22, and the end cover 21 covers the opening to form the internal environment of the battery cell 20. Without limitation, the end cover 21 and the housing 22 may alternatively be integrated. In some embodiments, the end cover 21 and the housing 22 may form a shared connection surface before other components are arranged inside the housing, and then the end cover 21 covers the housing 22 when inside of the housing 22 needs to be enclosed. The housing 22 may be of various shapes and sizes, such as a rectangular shape, a cylindrical shape, and a hexagonal prism shape. In some embodiments, the shape of the housing 22 may be determined based on a specific shape and size of the cell assembly 23. The housing 22 may be made of various materials, such as copper, iron, aluminum, stainless steel, aluminum alloy, and plastic, which are not particularly limited in the embodiments of the present application.

The cell assembly 23 is a component in the battery cell 20 that undergoes electrochemical reactions. The housing 22 may include one or more cell assemblies 23. The cell assembly 23 is mainly formed by winding or laminating a positive electrode plate and a negative electrode plate, and a separator is generally provided between the positive electrode plate and the negative electrode plate. Parts of the positive electrode plate and the negative electrode plate with active substances form a body portion of the cell assembly 23, while parts of the positive electrode plate and the negative electrode plate without active substances separately form tabs 23a. The positive electrode tab and the negative electrode tab may be located at one end of the body portion together or at two ends of the body portion separately. During charging and discharging of the battery, a positive electrode active substance and a negative electrode active substance react with the electrolyte solution, and the tabs 23a are connected to the electrode terminals 21a to form a current loop.

According to some embodiments of the present application, referring to FIG. 3, and further referring to FIG. 4, FIG. 4 is a schematic flowchart of a preparation method for a battery cell 20 according to some embodiments of the present application. The present application provides a preparation method for a battery cell 20. The preparation method for a battery cell 20 includes the following steps:
Step S100: Determine that the battery cell 20 is in an uncharged state.
Step S200: Spray an insulating material on at least some regions on an outer surface of a housing 22 of the battery cell 20 in a manner of electrostatic spraying.
Step S300: Perform curing processing on a region of the housing 22 on which the insulating material is sprayed, to obtain a battery cell 20 including an insulation layer.
Step S400: Inject an electrolyte solution into the battery cell 20 including the insulation layer.

The positive electrode plate includes a positive electrode current collector and a positive electrode active substance layer, the positive electrode active substance layer is coated to a surface of the positive electrode current collector, the positive electrode current collector not coated with the positive electrode active substance layer protrudes out of the positive electrode current collector already coated with the positive electrode active substance layer, and the positive electrode current collector not coated with the positive electrode active substance layer forms a positive electrode tab. By using the lithium-ion battery as an example, the positive electrode current collector may be aluminum foil, and a positive electrode active substance may be lithium cobalt oxide, lithium iron phosphate, ternary lithium, lithium manganese oxide, or the like. The positive electrode active substance and the like are stirred and mixed to obtain a positive electrode slurry. Then, the positive electrode slurry is coated on a surface of the positive electrode current collector. After the positive electrode slurry is baked and dried, the positive electrode plate is prepared by performing procedures such as cold pressing (rolling), pre-cutting, and slitting.

The negative electrode plate includes a negative electrode current collector and a negative electrode active substance layer, a surface of the negative electrode current collector is coated with the negative electrode active substance layer, the negative electrode current collector not coated with the negative electrode active substance layer protrudes from the negative electrode collector already coated with the negative electrode active substance layer, and the negative electrode current collector not coated with the negative electrode active substance layer forms a negative electrode tab. The negative electrode current collector may be copper foil. A negative electrode active substance may be carbon or silicon. The negative electrode active substance and the like are stirred and mixed to obtain a negative electrode slurry, and then the negative electrode slurry is coated on a surface of the negative electrode current collector. After the negative electrode slurry is baked and dried, the negative electrode plate is prepared by performing procedures such as cold pressing, pre-cutting, and slitting.

The separator may be at least one of a glass fiber fabric, a non-woven fabric, a polypropylene (Polypropylene, PP) film, or a polyethylene (Polyethylene, PE) film. The separator may be a single-layer film, or may be a multi-layer composite film. This is not limited herein.

It is determined that the battery cell 20 is in the uncharged state; In some embodiments, after the positive electrode plate, the negative electrode plate, the separator, and the housing 22 that does not include the insulation layer are assembled together, the electrolyte solution injection procedure is not performed temporarily, so that the battery cell 20 that does not include the electrolyte solution is obtained. The battery cell 20 is in the uncharged state because the battery cell does not include the electrolyte solution. Specifically, the positive electrode plate, the negative electrode plate, and the separator are wound or stacked into a cell assembly 23, the cell assembly 23 is mounted into the housing 22, and then an end cover 21 is covered and soldered at an opening of the housing 22, to obtain the battery cell 20 that does not include the electrolyte solution. In some other embodiments, the battery cell 20 may contain a small amount of electrolyte solution or a solid-state electrolyte, but is in the uncharged state.

The insulating material refers to a substance that is not conductive or conducts extremely little electricity under an action of a direct current voltage. The electrostatic spraying refers to a coating method in which an atomized paint is negatively charged under an action of a high-voltage direct current electric field by using a corona discharge principle, and is attracted to a positively charged surface of a to-be-painted object for discharging. The electrostatic spraying basically causes no phenomenon of bounce off of paint jet and scattering of paint mist, and has a very small loss of the paint mist. Therefore, the paint utilization is high, which may reach 85% or more. In addition, due to the effect of the high-voltage static electric field, dispersity of paint particles is high, and the paint particles are evenly distributed in the jet. Therefore, the coating formed on the surface of the to-be-painted object is also flat and even, the gloss and the adhesion of the paint film are both high, and the spraying efficiency is also high. In the present application, the to-be-painted object is the housing 22 of the battery cell 20. Because the battery cell 20 is in the uncharged state, the insulating material may be sprayed on at least some regions on the outer surface of the housing 22 in a manner of electrostatic spraying, to improve the paint utilization ratio, reduce the production costs, have a simple process, and achieve higher production efficiency. In addition, an insulation layer formed through electrostatic spraying has higher quality and better insulation performance, has high adhesion between the insulation layer and the housing 22, has higher environmental resistance, and has a longer service life. Process parameters such as a spraying distance, time, a voltage, and a flow rate of electrostatic spraying are not particularly limited in the present application, and can be selected according to actual requirements.

Performing curing processing on the region of the housing 22 on which the insulating material is sprayed refers to a process in which the substance in the insulating material is converted from a low polymer to a high polymer and is allowed to dry to form a film. After the insulating material coated on the outer surface of the housing 22 is solidified, an insulation layer attached to the outer surface of the housing 22 is formed, to obtain the battery cell 20 including the insulation layer, so as to perform insulation processing on the metal housing 22 of the battery cell 20, thereby effectively reducing safety problems such as scratch on the outer surface of the housing 22 or short circuit occurring on the battery cell 20, and improving safety of the battery cell 20.

After the to-be-sprayed insulation layer is cured, the electrolyte solution is injected into the battery cell 20 including the insulation layer, to obtain the battery cell 20 including the electrolyte solution. In some embodiments, the battery cell 20 is obtained by further performing processes such as vacuum encapsulation, formation, and sealing pin laser soldering after the electrolyte solution injection. During charging and discharging of the battery cell 20, active ions are intercalated and deintercalated back and forth between the positive electrode plate and the negative electrode plate, and the electrolyte solution serves to conduct active ions between the positive electrode plate and the negative electrode plate. The type of the electrolyte solution is not particularly limited in the present application, and can be selected according to actual requirements.

According to the preparation method for the battery cell 20 in the embodiments of the present application, a procedure sequence of the electrolyte solution injection procedure and the insulation spraying procedure in the production process of the battery cell 20 is adjusted. Insulation spraying is performed when assembly of the battery cell 20 is completed and the electrolyte solution is not injected. Because the battery cell 20 is uncharged in this case, the insulation spraying can be performed through electrostatic spraying. This can improve the paint utilization on the insulation layer of the battery housing 22 in the battery production process, reduce the production costs, simplify the spraying process, and improve the production efficiency. In addition, the insulation layer formed through electrostatic spraying has higher quality. This helps improve the uniformity of the insulation performance of the insulation layer, improve the insulation performance, expand the service life, and improve safety performance of the battery cell 20.

According to some embodiments of the present application, the insulating material is a photocuring insulating resin material; and the performing curing processing on a region of the housing 22 on which the insulating material is sprayed includes the following steps:
Step S310: Irradiate, by using ultraviolet light, the region of the housing 22 on which the insulating material is sprayed, to cure the insulating material.

The photocuring insulating resin material refers to a resin material that is formed by resin monomers and prepolymers, contains active functional groups, and can be initiated by a photosensitizer under irradiation of ultraviolet light to perform polymerization, to generate an insoluble coating film. After being irradiated by ultraviolet light, the photocuring isolating resin material can quickly change physically and chemically within short time, to perform cross-linking and curing. The photocuring isolating resin material includes one or more of polyurethane acrylate, epoxy acrylate, polyester acrylate, polyether acrylate, or the like, which is not limited herein.

The ultraviolet light curing, that is, UV (Ultraviolet Rays, ultraviolet ray) curing, refers to a process in which a liquid photocuring isolating resin material is rapidly aggregated by using radiant energy of ultraviolet light to form an insoluble solid coating film. The ultraviolet light curing rapidly implements hardening and drying in a unit of second, has a high curing speed, high production efficiency, and high energy utilization, does not require a high temperature, saves energy, has few organic volatile components, is environmental friendly, economic, and has wide adaptability. A wave length of ultraviolet light used for exciting the ultraviolet light curing may be 300 nm to 450 nm, and may be selected according to an actual requirement, and this is not limited herein. A light intensity of the ultraviolet light is not particularly limited, and may be selected according to an actual requirement. Time of the ultraviolet light irradiation may be 3 seconds to 30 seconds, and may be selected according to an actual requirement. This is not limited herein.

By using the photocuring insulating resin material as the insulating material, and irradiating, by using the ultraviolet light, the region of the housing 22 on which the insulating material is sprayed, the insulating material can be rapidly cured in short time, thereby greatly improving the production efficiency of the battery cell 20, This is suitable for high-speed automatic production, and facilitates large-scale production of the battery cell 20. In addition, it is energy-saving, environment-friendly, and has high economic efficiency and high adaptability.

According to some embodiments of the present application, the photocuring insulating resin material includes an ultraviolet light curing coating. The ultraviolet light curing coating is a coating that adopts ultraviolet light radiation curing. A thinner in the ultraviolet light curing coating is not a volatile organic solution, but is a non-volatile solution that directly participates in a curing film-forming process and has a reaction capability. After the film is formed, the thinner becomes a part of the coating film. The ultraviolet light curing coating may have a solid content of up to 100%, and does not contain a volatile organic compound. Therefore, pollution to the environment is small. In addition, the ultraviolet light curing coating has an excellent physical property, a high curing speed, and good performance of a curing product. The high solid content enables the ultraviolet light curing coating to be further applied to a very thin coating film.

The insulation processing is performed by coating the ultraviolet light-curing coating on the outer surface of the housing 22, in this way, the appearance of the insulation layer is controllable, the assembly of the battery cell 20 is not affected, a bonding force and an adhesion of the ultraviolet light-curing coating are strong, and the ultraviolet light curing coating does not easily fall off, so that the insulation performance of the housing 22 can be greatly improved, and the insulation performance is stable.

According to some other embodiments of the present application, the insulating material is a water-based coating or a solvent-based coating; and the performing curing processing on a region of the housing 22 on which the insulating material is sprayed includes the following steps:
Step S320: Perform baking processing on the battery cell 20, to cure the insulating material; where a baking temperature is greater than 60 degrees centigrade (°C) and less than 200°C.

The water-based coating is a coating in which water is used as a solution or as a disperse medium. The water-based coating has excellent non-stickiness and endurance, does not contain an organic solution, does not have poisons or pungent smells, is innocuous to the human body, does not pollute the environment, has good flexibility, and has features such as being water-resistant, wear-resistant, aging-resistant, and yellowing-resistant, dries quickly, and is convenient to use.

The solvent-based coating is a coating obtained by using an organic solution as a disperse medium. The solvent-based coating has better coating film quality, and can implement high-gloss coating. Environmental adaptability of the solvent-based coating is good, and a high-quality painting film is easily obtained. The solvent-based coating has a wide selection range of resin, and nearly all types of materials can be dissolved in the solution. Different types of materials have respective unique properties, and therefore, the solvent-based coating has a wide application range.

The electrostatic spraying is performed by using the water-based coating or the solvent-based coating, and then high-temperature baking is performed on the battery cell 20. In comparison with a battery including the electrolyte solution that can only withstand baking at a temperature of 60°C, the battery cell 20 that does not include the electrolyte solution is not injected with the solution, and thus can withstand baking at a higher temperature. Specifically, the baking temperature is greater than 60°C and less than 200°C, so that the water-based coating or the solvent-based coating rapidly dries and cures under a high-temperature aging process, and the insulation layer is formed on the outer surface of the housing 22.

In some embodiments, the baking temperature is greater than 100°C and less than 180°C.

The water-based coating or the solvent-based coating is used as the insulating material, and the high-temperature baking processing is performed on the battery cell 20, so that the insulating material can be rapidly dried and cured, and a selection range of the production process can be greatly expanded, thereby significantly improving performance of the coating, reducing time consumption of the procedure, greatly improving the production efficiency, and reducing the production costs. It is suitable for high-speed automated production, and facilitates large-scale production of the battery cell 20.

According to some embodiments of the present application, after obtaining the battery cell 20 including the insulation layer, and before the injecting an electrolyte solution into the battery cell 20 including the insulation layer, the method further includes the following steps:
Step S301: Perform insulation detection on the housing 22.

After the insulating material is cured to form the insulation layer, insulation detection is performed on the housing 22, to detect whether insulation performance of the housing 22 is qualified, for example, to detect whether problems of leakage and short circuit exist and whether a breakdown voltage satisfies a requirement. A battery cell 20 detected to be qualified is transferred to an electrolyte solution injection station for the next production procedure, and a battery cell 20 detected to be unqualified may be recycled.

The insulation performance of the housing 22 is detected before the electrolyte solution is injected, to identify and remove a battery cell 20 whose insulation performance does not satisfy a requirement, so that the insulation performance of the battery cell 20 satisfies a product requirement, and electrolyte solution injection on the battery cell 20 that does not satisfy the requirement is reduced, to reduce a waste of the electrolyte solution, effectively save materials, and reduce the production costs.

According to some embodiments of the present application, before the spraying an insulating material on at least some regions on an outer surface of a housing 22 of the battery cell 20 in a manner of electrostatic spraying, the method further includes:
Step S101: Perform cleaning processing on the outer surface of the housing 22.

By performing cleaning processing on the outer surface of the housing 22, impurities such as floating dust, rust, or stains on the outer surface of the housing 22 can be removed. This helps improve the adhesion between the insulation layer and the outer surface of the housing 22, and therefore, the insulation layer does not easily fall off. This further improves the quality of the insulation layer, has better insulation performance, and has a longer service life.

According to some embodiments of the present application, the cleaning processing includes any one or more of sandblasting cleaning, plasma cleaning, and laser cleaning.

The sandblasting cleaning means removing floating dust, rust, stains, or the like on the outer surface of the housing 22 by using a large quantity of sands moving at a high speed to impinge a large region on the outer surface of the housing 22, thereby implementing the cleaning function. In some embodiments, through a plurality of times of sandblasting, a frosted surface can further be formed on the outer surface on which rust or stains are removed. For example, a sandblasting nozzle may be used to spray the sands to the outer surface of the housing 22 at least once, to remove the sands and stains on the outer surface. Alternatively, the outer surface of the housing 22 may be placed in a negative pressure environment generated by a negative pressure port of a negative pressure extractor, and a sandblasting nozzle is used to spray sands to the outer surface of the housing 22 at least once, to remove the sands and stains on the outer surface. The quantity of times of sandblasting in sandblasting cleaning may be multiple, for example, two or three.

In the plasma cleaning, a low-temperature plasma generated through excitation by a high-frequency voltage is sprayed onto the outer surface of the housing 22, to remove floating ash, rust, stains, or the like on the outer surface of the housing 22, thereby cleaning the outer surface of the housing 22. A temperature of the low-temperature plasma is low, and ranges from 20°C to 30°C. Therefore, when the outer surface of the housing 22 is cleaned, the outer surface of the housing 22 is not burned out or an oxide layer is not formed on the outer surface of the housing 22, achieving a good cleaning effect.

The laser cleaning means using a laser to emit dotted equidistant laser to the outer surface of the housing 22. With uniform movement of the laser relative to the outer surface of the housing 22, the outer surface of the housing 22 can be uniformly irradiated by the laser, so that the entire outer surface of the housing 22 can be irradiated by the laser to the same degree. With the laser performs surface reconstruction on the outer surface of the housing 22, so that the outer surface of the housing 22 can be uniformly cleaned.

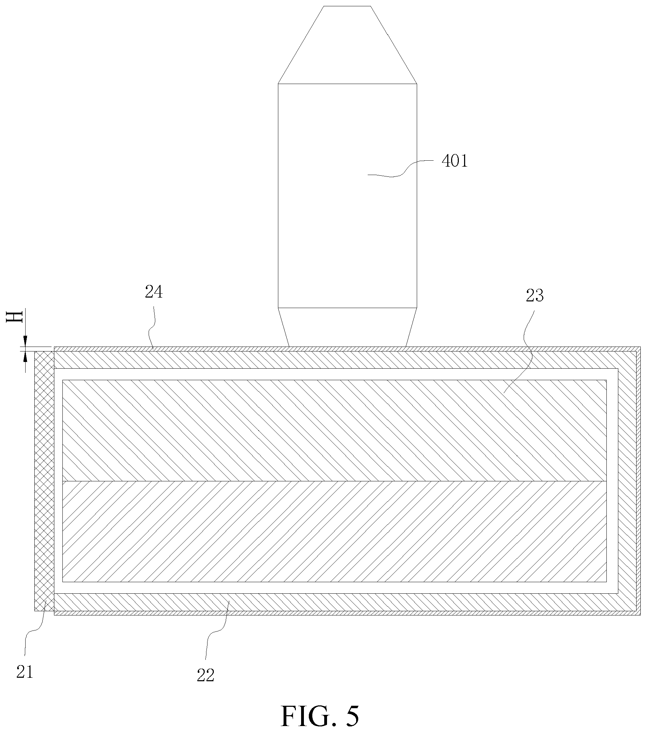

According to some embodiments of the present application, referring to FIG. 3, and further referring to FIG. 5, FIG. 5 is a schematic diagram of a measurement method of a thickness of an insulation layer 24 on a battery cell 20 according to some embodiments of the present application. The present application provides a battery cell 20. The battery cell 20 is prepared according to the preparation method for a battery cell 20 in any one of the foregoing embodiments. The battery cell 20 includes a housing 22, a cell assembly 23, and an end cover 21. An insulation layer 24 is disposed on at least some regions on an outer surface of the housing 22; the cell assembly 23 is accommodated in the housing 22; and the end cover 23 covers an opening of the housing 22.

Specifically, the thickness of the insulation layer 24 on the housing 22 may be obtained through measurement by using a film thickness measuring device. Referring to FIG. 5, the film thickness measuring device includes a host (not shown in the figure) and a measurement probe 401. The measurement probe 401 is configured to send a detection signal. The host measures a film thickness of a film layer covering a base material by detecting a received response signal. When the thickness of the insulation layer 24 on the housing 22 is measured, the base material is the housing 22, and the film layer is the insulation layer 24. The measurement probe 401 is in contact with the insulation layer 24 of the housing 22, the measurement probe 401 sends a detection signal, the housing 22 can respond to the detection signal and feed back a response signal, and the host measures the thickness of the insulation layer 24 based on the received response signal.

Because the preparation method for a battery cell 20 in the foregoing embodiments is used, it is beneficial to improving safety performance of the battery cell 20, has a longer service life, and can further improve paint utilization and reduce production costs.

According to some embodiments of the present application, the film thickness measuring device includes a handheld film thickness measuring device and a desktop film thickness measuring device. The handheld film thickness measuring device includes one of a magnetic induction layer thickness meter, an eddy current layer thickness meter, and a fluorescent X-ray layer thickness meter.

The magnetic induction layer thickness meter uses a magnetic induction principle to measure a film layer thickness by using a value of magnetic flux that flows from the measurement probe 401 into a ferromagnetic base through a non-ferromagnetic film layer; or may measure a magnetic resistance corresponding to the magnetic flux to indicate the thickness of the film layer. A thicker film layer indicates a greater magnetic resistance and smaller magnetic flux. A resolution of the magnetic induction layer thickness meter reaches 0.1 µm, an allowable error reaches 1%, and a range reaches 10 mm. The magnetic induction layer thickness meter may be configured to accurately measure a paint layer on a surface of a steel, a protective layer on porcelain or porcelain enamel, a covering layer on a plastic or a rubber, electroplated layers of various non-ferrous metals including nickel and chromium, various anticorrosion coating layers in chemical and oil industry, and the like. In this embodiment, the ferromagnetic base is the housing 22, and the film layer is the insulation layer 24.

The eddy current layer thickness meter is a thickness meter using the eddy current principle. An alternating magnetic field is generated on the surface of the head of the measurement probe 401 by using an alternating current coil with a high frequency (a frequency greater than 1 MHz), and when the measurement probe 401 approaches the surface of the conductive base, the alternating magnetic field forms an eddy current on the surface of the conductive base. A closer distance between the measurement probe 401 and the conductive base indicates a larger eddy current and a larger reflection resistance. The feedback effect amount represents the value of the distance between the measurement probe 401 and the conductive base, that is, the value of the thickness of the non-conductive layer on the conductive base. A resolution of the eddy current layer thickness meter reaches 0.1 µm, an allowable error reaches 1%, and a range reaches 10 mm. The eddy current layer thickness meter is suitable for measuring a thickness of a film layer on a non-ferromagnetic metal base. The eddy current layer thickness meter may be configured to measure of non-conductive layers on all conductive bodies, for example, paints, plastic coatings, and anodic oxidation films on surfaces of aircrafts and spacecrafts, vehicles, home appliances, aluminum alloy doors and windows, and other aluminum products. In this embodiment, the conductive base is the housing 22, and the non-conductive layer is the insulation layer 24.

According to some embodiments of the present application, a thickness H of the insulation layer 24 on the housing 22 ranges from 80 µm to 200 µm.

Insulation performance of the insulation layer 24 refers to performance of the dielectric strength and voltage breakdown resistance of the insulation layer 24.

The dielectric strength is a measure of electric strength when a material is used as an insulator. The dielectric strength is defined as a maximum voltage withstood in a unit thickness when the insulator is broken down, and is represented in volt per unit thickness. Higher dielectric strength of the insulating material indicates better quality of the insulating material used as an insulator. The dielectric strength of the insulation layer 24 is related to an insulating material used for the insulation layer 24. The dielectric strength of the insulation layer 24 is the same when the same insulating material is used.

Breakdown of the insulation layer 24 means that under an effect of a strong electric field, the insulation layer 24 loses an electric insulating capability and suddenly changes from an insulating state to a good electrically-conductive state. A minimum threshold voltage that causes the breakdown of the insulation layer 24 is a breakdown voltage of the insulation layer 24. The breakdown voltage of the insulation layer 24 is related to the dielectric strength and the thickness of the insulation layer 24. When dielectric strength of the insulation layers 24 is the same, a larger thickness of the insulation layer 24 or a higher breakdown voltage of the insulation layer 24 indicates better voltage breakdown resistance of the insulation layer 24.

It can be seen that the thickness of the insulation layer 24 affects the insulation performance of the insulation layer 24, and further affects the safety performance and the yield rate of the battery cell 20. In some cases, the thickness of the insulation layer 24 further affects an appearance and a volume size of the battery cell 20, thereby further affecting subsequent assembly and material costs of the battery cell 20. In addition, by using the electrostatic spraying, the insulation layer 24 with higher uniformity can be obtained, thereby helping to reduce the thickness of the insulation layer 24 and improving the yield rate while improving the insulation performance of the insulation layer 24.

The thickness H of the insulation layer 24 is set to 80 µm to 200 µm, so that the housing 22 has good insulation performance, to improve the safety performance of the battery cell 20. In addition, the thickness of the insulation layer 24 is controlled, so that the appearance and the volume dimension of the battery cell 20 can be well controlled, to facilitate subsequent assembly of the battery cell 20, improve the production efficiency, and improve a yield rate. In addition, it is beneficial to save materials, and reduce production costs.

According to some embodiments of the present application, a thickness H of the insulation layer 24 ranges from 110 µm to 120 µm.

Further, the thickness H of the insulation layer 24 is set to 110 µm to 120 µm, so that it is beneficial to better considering the insulation performance of the housing 22, the appearance volume of the battery cell 20, and the yield rate, and reducing the production costs. This is suitable for large-scale production.

Using an example in which the insulating material of the insulation layer 24 is a photocuring insulating resin material, battery cells 20 having different thicknesses of insulation layers 24 are tested for insulation performance and yield rates. For the test result, refer to the following Table 1.

**Table 1-Testing results of insulation performance and yield rates of battery cells 20 having different thicknesses of insulation layers 24**

| | Example 1 | Example 2 | Example 3 | Example 4 | Comparative Example 1 | Comparative Example 2 |
|---|---|---|---|---|---|---|
| Insulation layer thickness | 80 | 110 | 120 | 200 | 50 | 250 |
| Dielectric strength | ≥ 45 | ≥ 45 | ≥ 45 | ≥ 45 | ≥ 45 | ≥ 45 |
| Voltage breakdown resistance | Qualified | Qualified | Qualified | Qualified | Invalid | Qualified |
| Yield rate | 90% | 97.5% | 98.5% | 99% | 0 | Dimension is oversize |

In Table 1, a unit of the thickness H of the insulation layer 24 is micrometer (µm); a unit of the dielectric strength is kilovolt per millimeter (kV/mm); and in the voltage breakdown resistance performance, under an effect of a direct current 2700 volt (DC 2700 V) strong electric field, a leakage current less than or equal to 0.1 milliamp (≤ 0.1 mA) is qualified, and a leakage current greater than 0.1 milliamp (> 0.1 mA) is unqualified.

It can be seen that, when the thickness H of the insulation layer 24 is in a range from 80 micrometer to 200 micrometer, the battery cell 20 has good insulation performance, the appearance and the volume of the battery cell 20 are well controlled, and the yield rate is improved; when the thickness H of the insulation layer 24 is in a range from 110 micrometer to 120 micrometer, the battery cell 20 can better balance between the insulation performance, the appearance, the volume, and the yield rate, and this helps reduce production costs.

According to some embodiments of the present application, referring to FIG. 2, the present application provides a battery 100. The battery 100 includes a box 10 and the battery cell 20 provided in the foregoing embodiments, where the battery cell 20 is accommodated in the box 10.

Because the battery 100 has the same technical effect as the foregoing battery cell 20, details are not described herein again.

According to some embodiments of the present application, the present application further provides a power consuming apparatus. The power consuming apparatus includes the battery 100 or the battery cell 20 provided in the foregoing embodiments, and the battery 100 and the battery cell 20 are configured to provide electric energy for the power consuming apparatus.

The power consuming apparatus may be any one of the foregoing devices or systems to which the battery 100 is applied. Because the power consuming apparatus has the same technical effect as the battery 100 and the battery cell 20, details are not described herein again.

In conclusion, it should be noted that the foregoing embodiments are for description of the technical solutions of the present application only rather than for limiting the present application. Although the present application has been described in detail with reference to the foregoing embodiments, those of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. Especially, provided that there is no structural conflict, the various technical features mentioned in each embodiment can be combined in any way. The present application is not limited to the particular embodiments disclosed herein, but includes all technical solutions that fall within the scope of the claims.

## Claims

1. A preparation method for a battery cell, wherein the preparation method for a battery cell comprises:
determining that the battery cell is in an uncharged state;
spraying an insulating material on at least some regions on an outer surface of a housing of the battery cell in a manner of electrostatic spraying;
performing curing processing on a region of the housing on which the insulating material is sprayed, to obtain a battery cell comprising an insulation layer; and
injecting an electrolyte solution into the battery cell comprising the insulation layer.

2. The preparation method for a battery cell according to claim 1, wherein the insulating material is a photocuring insulating resin material; and
the performing curing processing on a region of the housing on which the insulating material is sprayed comprises:
irradiating, by using ultraviolet light, the region of the housing on which the insulating material is sprayed, to cure the insulating material.

3. The preparation method for a battery cell according to claim 2, wherein the photocuring insulating resin material comprises an ultraviolet light curing coating.

4. The preparation method for a battery cell according to claim 2, wherein duration of ultraviolet light irradiation ranges from 3 seconds to 30 seconds.

5. The preparation method for a battery cell according to claim 1, wherein the insulating material is a water-based coating or a solvent-based coating; and
the performing curing processing on a region of the housing on which the insulating material is sprayed comprises:
performing baking processing on the battery cell, to cure the insulating material; wherein a baking temperature is greater than 60°C and less than 200°C.

6. The preparation method for a battery cell according to claim 5, wherein the baking temperature is greater than 100°C and less than 180°C.

7. The preparation method for a battery cell according to any one of claims 1 to 6, wherein after obtaining the battery cell comprising the insulation layer, and before the injecting an electrolyte solution into the battery cell comprising the insulation layer, the method further comprises:
performing insulation detection on the housing.

8. The preparation method for a battery cell according to any one of claims 1 to 6, wherein before the spraying an insulating material on at least some regions on an outer surface of a housing of the battery cell in a manner of electrostatic spraying, the method further comprises:
performing cleaning processing on the outer surface of the housing.

9. The preparation method for a battery cell according to claim 8, wherein the cleaning processing comprises any one or more of sandblasting cleaning, plasma cleaning, and laser cleaning.

10. The preparation method for a battery cell according to any one of claims 1 to 6, wherein the determining that the battery cell is in an uncharged state comprises: winding or stacking a positive electrode plate, a negative electrode plate, and a separator into a cell assembly, mounting the cell assembly into the housing, and then covering and soldering an end cover at an opening of the housing, to obtain a battery cell that does not comprise an electrolyte solution.

11. A battery cell, wherein the battery cell is prepared according to the preparation method for a battery cell according to any one of claims 1 to 10; and the battery cell comprises:
a housing, wherein an insulation layer is disposed on at least some regions on an outer surface of the housing;
a cell assembly, wherein the cell assembly is accommodated in the housing; and
an end cover, wherein the end cover covers an opening of the housing.

12. The battery cell according to claim 11, wherein a thickness of the insulation layer on the housing ranges from 80 µm to 200 µm.

13. The battery cell according to claim 12, wherein the thickness of the insulation layer ranges from 110 µm to 120 µm.

14. A battery, wherein the battery comprises the battery cell according to any one of claims 11 to 13.

15. A power consuming apparatus, wherein the power consuming apparatus comprises the battery according to claim 14 or the battery cell according to any one of claims 11 to 13, and the battery and the battery cell are configured to supply electric energy.
